# EUROPEAN PATENT APPLICATION

(11) **EP 4 708 886 A1**
(43) Date of publication of application: **11.03.2026**
(21) Application number: 24860232.8
(22) Date of filing: 06.08.2024
(51) Int. Cl.: H04N 21/462, H04N 21/43, H04N 21/436, H04N 21/4363

(54) **ELECTRONIC DEVICE AND CONTROL METHOD THEREFOR**

(30) Priority: 30.08.2023 KR 20230114397; 12.10.2023 KR 20230136072
(71) Applicant: Samsung Electronics Co., Ltd., Suwon-si, Gyeonggi-do 16677 (KR)
(72) Inventor: JI, Kumran, Suwon-si Gyeonggi-do 16677 (KR); KANG, Wooseok, Suwon-si Gyeonggi-do 16677 (KR); KIM, Doohyun, Suwon-si Gyeonggi-do 16677 (KR); KIM, Minho, Suwon-si Gyeonggi-do 16677 (KR); YOO, Kiwon, Suwon-si Gyeonggi-do 16677 (KR); CHOI, Bumkwi, Suwon-si Gyeonggi-do 16677 (KR)
(74) Representative: Appleyard Lees IP LLP
(86) International application number: PCT/KR2024/011625
(87) International publication number: WO 2025/048311

(57) **Abstract**

An electronic device and a control method therefor are provided. The electronic device comprises: a communication interface; a memory for storing at least one instruction; and a processor, which acquires specification information about performance by which an external device can process an image, analyzes, when the image is input, the input image so as to acquire processing information of the input image, processes the input image on the basis of the processing information of the input image and the specification information of the external device, generates, on the basis of the processed image, wireless data to be transmitted to the external device, and transmits the generated wireless data through the communication interface to the external device.

## Description

### [Technical Field]

The disclosure relates to an electronic apparatus and a control method therefor, and more particularly, to an electronic apparatus that provides wireless data generated using an image to an external device and a control method therefor.

### [Background Art]

With recent developments in wireless communication technology, images stored by electronic apparatuses are transmitted to external devices and services that provide the images through the external devices are being provided.

However, when providing the images stored by the electronic apparatuses to the external devices, there has been a limitation of not being able to provide an optimized image due to not being able to support image processing for an image transmitted by the electronic apparatus according to specification information supported by the external device.

In addition, while various new image processing methods are being developed with the development of image processing technology, there is a limitation for the external devices of the related art in providing an image of an improved image due to not being able to process images using the new image processing method.

### [Disclosure]

### [Technical Solution]

According to an embodiment, an electronic apparatus includes a communication interface, memory storing at least one instruction, and a processor configured to obtain specification information regarding capability of an external device capable of processing an image, obtain, based on an image being input, processing information of the input image by analyzing the input image, process the input image based on processing information of the input image and specification information of the external device, generate wireless data to transmit to the external device based on the processed image, and transmit the generated wireless data to an external device through the communication interface.

The processor may be configured to identify whether the external device is capable of processing the input image according to processing information of the input image based on specification information of the external device, and process, based on the external device being identified as not capable of processing the input image according to processing information of the input image, the input image based on processing information of the input image, and generate first wireless data to transmit to the external device based on the processed image.

The processor may be configured to generate, based on the external device being identified as capable of processing the input image according to processing information of the input image, second wireless data to transmit to the external device based on the input image, and the second wireless data may include processing information of the input image.

Specification information of the external device may include information about whether the external device supports a multi-view function, and the processor may be configured to obtain, based on an image being input, processing information including a plurality of images for the input image to provide a multi-view image by analyzing the input image.

The processor may be configured to generate, based on the external device being identified as supporting a multi-view function based on specification information of the external device, third wireless data about the plurality of images, and control the communication interface to transmit the third wireless data to the external device, and process, based on the external device being identified as not supporting a multi-view function based on specification information of the external device, the input image to generate a multi-view image based on the plurality of images, generate fourth wireless data about the generated multi-view image, and control the communication interface to transmit the fourth wireless data to the external device.

Specification information of the external device may include information about whether the external device supports a High Dynamic Range (HDR) function, and the processor may be configured to analyze, based on an image being input, the input image and obtain processing information necessary for HDR processing of the input image.

The processor may be configured to generate, based on the external device being identified as supporting a HDR function based on specification information of the external device, fifth wireless data based on the input image, control the communication interface to transmit the fifth wireless data to the external device, and at this time, the fifth wireless data may include processing information for the HDR processing, and perform, based on the external device being identified as not supporting a HDR function based on specification information of the external device, HDR processing of the input image, generate sixth wireless data about an image performed with the HDR processing, and control the communication interface to transmit the sixth wireless data to the external device.

Specification information of the external device may include information about whether the external device supports an AI image/AI audio processing function, and the processor may be configured to obtain, based on an image being input, processing information necessary for AI image or AI audio processing of the input image.

The processor may be configured to generate, based on the external device being identified as supporting an AI image processing function based on specification information of the external device, seventh wireless data based on the input image, control the communication interface to transmit the seventh wireless data to the external device, and at this time, the seventh wireless data may include processing information for the AI image processing, and perform, based on the external device being identified as not supporting an AI image processing function based on specification information of the external device, AI image processing of the input image, generate eighth wireless data about an image performed with the AI image processing, and control the communication interface to transmit the eighth wireless data to the external device.

The processor may be configured to generate, based on the external device being identified as supporting an AI audio processing function based on specification information of the external device, ninth wireless data based on the input image, control the communication interface to transmit the ninth wireless data to the external device, and at this time, the ninth wireless data may include processing information for the AI audio processing, and perform, based on the external device being identified as not supporting an AI audio processing function based on specification information of the external device, AI audio processing of an audio of the input image, generate tenth wireless data about an image that includes an audio performed with the AI audio processing, and control the communication interface to transmit the tenth wireless data to the external device.

Specification information of the external device may include information about whether the external device supports an edge blending function, and the processor may be configured to obtain, based on an image being input, processing information necessary for edge blending processing of the input image, generate, based on the external device being identified as supporting an edge blending function based on specification information of the external device, eleventh wireless data based on the input image, control the communication interface to transmit the eleventh wireless data to the external device, and at this time, the eleventh wireless data may include processing information for the edge blending processing, and perform, based on the external device being identified as not supporting an edge blending function based on specification information of the external device, edge blending processing of the input image, generate twelfth wireless data about an image performed with the edge blending processing, and control the communication interface to transmit the twelfth wireless data to the external device.

Meanwhile, according to an embodiment of the disclosure, a control method of an electronic apparatus includes obtaining specification information regarding capability of an external device capable of processing an image, obtaining, based on an image being input, processing information of the input image by analyzing the input image, processing the input image based on processing information of the input image and specification information of the external device, generating wireless data to transmit to the external device based on the processed image, and transmitting the generated wireless data to the external device.

The processing may include identifying whether the external device is capable of processing the input image according to processing information of the input image based on specification information of the external device, and processing, based on the external device being identified as not capable of processing the input image according to processing information of the input image, the input image based on processing information of the input image, and the generating may include generating first wireless data to transmit to the external device based on the processed image.

The generating may include generating, based on the external device being identified as capable of processing the input image according to processing information of the input image, second wireless data to transmit to the external device based on the input image, and the second wireless data may include processing information of the input image.

Specification information of the external device may include information about whether the external device supports a multi-view function, and obtaining processing information of the input image may include obtaining, based on an image being input, processing information including a plurality of images for the input image to provide a multi-view image by analyzing the input image.

The processing may include processing, based on the external device being identified as not supporting a multi-view function based on specification information of the external device, the input image so as to generate a multi-view image based on the plurality of images, and the generating may include generating, based on the external device being identified as supporting a multi-view function based on specification information of the external device, third wireless data about the plurality of images, and generating, based on the external device being identified as not supporting a multi-view function based on specification information of the external device, fourth wireless data about the generated multi-view image.

Specification information of the external device may include information about whether the external device supports a High Dynamic Range (HDR) function, and obtaining processing information of the input image may include analyzing, based on an image being input, the input image and obtaining processing information necessary for HDR processing of the input image.

The processing may include performing, based on the external device being identified as not supporting a HDR function based on specification information of the external device, HDR processing of the input image, and the generating may include generating, based on the external device being identified as supporting a HDR function based on specification information of the external device, fifth wireless data based on the input image, at this time, the fifth wireless data may include processing information for the HDR processing, and generating, based on the external device being identified as not supporting a HDR function based on specification information of the external device, sixth wireless data about an image performed with the HDR processing.

Specification information of the external device may include information about whether the external device supports an AI image/AI audio processing function, and obtaining processing information of the input image may include obtaining, based on an image being input, processing information necessary for AI image or AI audio processing of the input image, and the processing may include performing, based on the external device being identified as not supporting an AI image processing function based on specification information of the external device, AI image processing of the input image, and the generating may include generating, based on the external device being identified as supporting an AI image processing function based on specification information of the external device, seventh wireless data based on the input image, and at this time, the seventh wireless data may include processing information for the AI image processing, and generating, based on the external device being identified as not supporting an AI image processing function based on specification information of the external device, eighth wireless data about an image performed with the AI image processing.

According to an embodiment of the disclosure, a computer-readable recording medium that includes a program for executing a control method of an electronic apparatus includes obtaining specification information regarding capability of an external device capable of processing an image, obtaining, based on an image being input, processing information of the input image by analyzing the input image, processing the input image based on processing information of the input image and specification information of the external device, generating wireless data to transmit to the external device based on the processed image, and transmitting the generated wireless data to the external device.

### [Description of Drawings]

FIG. 1A and FIG. 1B are diagrams illustrating an image transmitting system according to an embodiment of the disclosure;
FIG. 2 is a block diagram illustrating a configuration of an electronic apparatus according to an embodiment of the disclosure;
FIG. 3 is a block diagram illustrating configurations of an electronic apparatus and an external device for image processing and image transmission according to an embodiment of the disclosure;
FIG. 4 is a flowchart illustrating an image transmitting example according to whether an external device supports a multi-view function according to an embodiment of the disclosure;
FIG. 5 is a flowchart illustrating an image transmitting example according to whether an external device supports a HDR function according to an embodiment of the disclosure;
FIG. 6 is a flowchart illustrating an image transmitting example according to whether an external device supports an AI image/ AI audio processing function according to an embodiment of the disclosure;
FIG. 7 is a flowchart illustrating an image transmitting example according to whether an external device supports an edge blending function according to an embodiment of the disclosure; and
FIG. 8 is a flowchart illustrating a control method of an electronic apparatus according to an embodiment.

### [Mode for Invention]

Various modifications may be made to the embodiments of the disclosure, and there may be various types of embodiments. Accordingly, specific embodiments will be illustrated in drawings, and described in detail in the detailed description. However, it should be noted that the various embodiments are not for limiting the scope of the disclosure to a specific embodiment, but they should be interpreted to include all modifications, equivalents or alternatives of the embodiments included in the ideas and the technical scopes disclosed herein. With respect to the description of the drawings, like reference numerals may be used to indicate like elements.

In describing the disclosure, in case it is determined that the detailed description of related known technologies or configurations may unnecessarily confuse the gist of the disclosure, the detailed description thereof will be omitted.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used in the disclosure have been merely used to describe a specific embodiment, and is not intended to limit the scope of protection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, phrases such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first", or "second" used in the disclosure may limit various elements regardless of order and/or importance, and may be used merely to distinguish one element from another element and not limit the relevant elements.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

Conversely, when the certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, a phrase "a processor configured to (or set up to) perform A, B, or C" may mean a dedicated processor for performing a relevant operation (e.g., an embedded processor), or a generic-purpose processor (e.g., a central processing unit (CPU) or an application processor) capable of performing the relevant operations by executing one or more software programs stored in a memory device.

The term 'module' or 'part' used in one or more embodiments herein perform at least one function or operation, and may be implemented with hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

Meanwhile, the various elements and areas of the drawings have been schematically illustrated. Accordingly, the technical spirit of the disclosure is not limited by relative sizes and distances illustrated in the accompanied drawings.

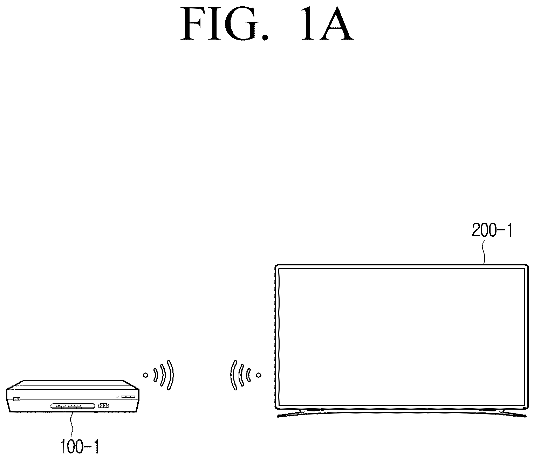

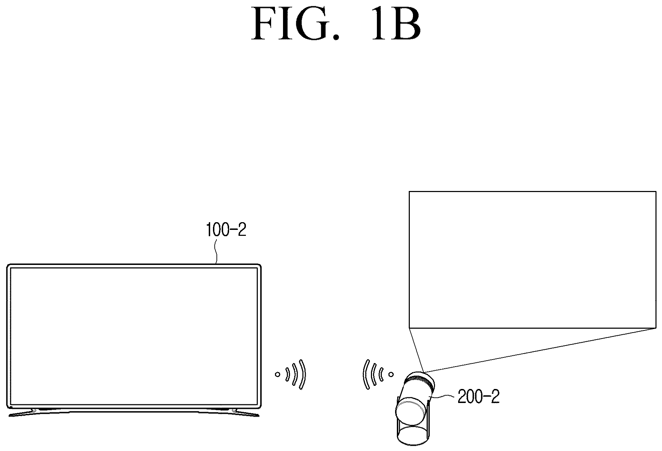

Various embodiments of the disclosure will be described in detail below using the accompanied drawings. FIG. 1A and FIG. 1B are diagrams illustrating an image transmitting system according to an embodiment of the disclosure. As shown in FIG. 1A and FIG. 1B, the system may include an electronic apparatus 100 and an external device 200. At this time, the electronic apparatus 100 may be implemented as a set top box 100-1 and the like as shown in FIG. 1A, and the external device 200 may be implemented as a TV 200-1 as shown in FIG. 1A. Alternatively, the electronic apparatus 100 may be implemented as a TV 100-2 as shown in FIG. 1B, and the external device 200 may be implemented as a projector 200-2 as shown in FIG. 1B. However, the electronic apparatus 100 and the external device 200 described in FIG. 1A and FIG. 1B are merely one embodiment, and the electronic apparatus 100 may be implemented in various electronic apparatuses such as, for example, and without limitation, a stick TV, a smartphone, a notebook PC, and the like, and the external device 200 may be implemented in various electronic apparatuses having an output device such as a display, such as a smartphone or a notebook PC.

The electronic apparatus 100 may obtain specification information of the external device 200 from the external device 200. At this time, the specification information may be information regarding capability(performance or function) of an external device 200 capable of processing an image , and may include information such as, for example, and without limitation, whether a multi-view function is supported, whether a HDR function is supported, whether an AI image/AI audio processing function is supported, and the like. However, the above is merely one embodiment, and various specification information such as, for example, and without limitation, whether a room to room share (or, screen link) function is supported, whether a mirroring function is supported, whether a variable refresh rate (VRR) function is supported, whether an edge blending function is supported, and the like may be obtained.

The electronic apparatus 100 may receive input of an image. At this time, the image being input may be an image stored in the electronic apparatus 100, but this is merely one embodiment, and may include images and the like received by the electronic apparatus 100 from various sources.

When an image is input, the electronic apparatus 100 may obtain processing information of the input image by analyzing the input image. At this time, the processing information of the input image may be information about image processing which can be applied to the input image, and may include information about, for example, a multi-view image processing, a HDR processing, the AI image/AI audio processing, the room to room share, the mirroring, a VRR processing, and an edge blending processing. Meanwhile, the processing information of the input image may be obtained by analyzing the input image, but this is merely one embodiment, and may be obtained according to a user input.

The electronic apparatus 100 may process the input image based on processing information of the input image and specification information of the external device 200, and generate wireless data to transmit to the external device 200 based on the processed image. Specifically, the electronic apparatus 100 may identify whether the external device 200 is capable of processing the input image according to the processing information of the input image based on the specification information of the external device 200. At this time, the electronic apparatus 100 may obtain specification information based on identification information of the external device 200. Specifically, the electronic apparatus 100 may obtain identification information (e.g., model name, model number, etc.) about the external device 200 through a user input or obtain identification information (e.g., Extended Display Identification Date (EDID)) about the external device 200 in a pairing process with the external device 200. Then, the electronic apparatus 100 may obtain the specification information of the external device 200 through an external DB or a website based on the obtained identification information about the external device 200. Then, the electronic apparatus 100 may identify whether the external device 200 is capable of processing the input image according to processing information of the input image based on the obtained specification information of the external device 200

Based on the external device 200 being identified as not capable of processing the input image according to the processing information of the input image, the electronic apparatus 100 may process the input image based on the processing information of the input image. Then, the electronic apparatus 100 may generate first wireless data to transmit to the external device 200 based on the processed image. However, based on the external device 200 being identified as capable of processing the input image according to the processing information of the input image, the electronic apparatus 100 may generate second wireless data to transmit to the external device 200 based on the input image. In other words, based on the external device 200 being identified as capable of processing the input image according to the processing information of the input image, the electronic apparatus 100 may generate second wireless data using the input image without processing the image according to the processing information. At this time, the processing information of the input image may be included in the second wireless data.

The electronic apparatus 100 may transmit the generated wireless data to the external device 200. Then, the external device 200 may provide the input image based on the received wireless data. Specifically, based on the external device 200 being identified as not capable of processing the input image according to the processing information of the input image, the external device 200 may receive the first wireless data generated based on the processed image, and provide the image to a user based on the received wireless data. However, based on the external device 200 being identified as capable of processing the input image according to the processing information of the input image, the external device 200 may receive the second wireless data generated based on the input image, process the input image based on the processing information included in the second wireless data, and provide the processed image to the user.

As described above, based on the electronic apparatus 100 performing an image processing function not supported by the external device 200, the latest image processing function may be provided using the external device 200 purchased previously without having to purchase a new device.

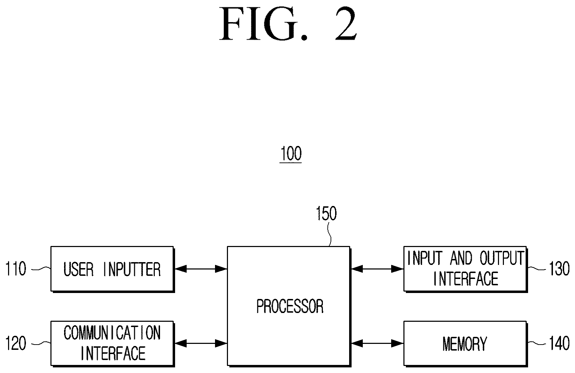

FIG. 2 is a block diagram illustrating a configuration of an electronic apparatus according to an embodiment of the disclosure. As shown in FIG. 2, the electronic apparatus may include a user inputter 110, a communication interface 120, an input and output interface 130, memory 140, and a processor 150. However, the above is merely one embodiment, and a portion of configurations may be removed or added according to types of the electronic apparatus 100. For example, based on the electronic apparatus 100 being implemented as a TV, the electronic apparatus 100 may include various configurations such as, for example, and without limitation, a display, a camera, a speaker, and the like.

The user inputter 110 may include a remote control receiver, a button, a lever, a switch a touch-type interface, and the like. At this time, the touch-type interface may be implemented in a method that receives input by touch of the user on a display screen of the electronic apparatus 100.

Specifically, the user inputter 110 may receive a user input for whether to apply the image processing (or audio processing) function to the input image. For example, the user inputter 110 may receive a user input for whether to apply an AI image/ AI audio processing function to the input image.

The communication interface 120 may include at least one circuitry and perform communication with external devices or servers of various types. The communication interface 120 may include at least one of a Bluetooth Low Energy (BLE) module, a Wi-Fi communication module, a cellular communication module, a 3rd Generation (3G) mobile communication module, a 4th Generation (4G) mobile communication module, a 4G Long Term Evolution (LTE) communication module, and a 5th Generation (5G) mobile communication module.

Specifically, the communication interface 120 may receive input of an image from an external source. In addition, the communication interface 120 may transmit wireless data generated by the processor 150 to the external device 200. In addition, the communication interface 120 may receive specification information of the external device 200 from the external device 200.

The input and output interface 130 may be a configuration for inputting and outputting at least one of audio and image signals. In an example, the input and output interface 130 may be a High Definition Multimedia Interface (HDMI), but this is merely one embodiment, and may be any one interface of a Mobile High-Definition Link (MHL), a Universal Serial Bus (USB), a Display Port (DP), Thunderbolt, a Video Graphics Array (VGA) port, a RGB port, a D-subminiature (D-SUB), or a Digital Visual Interface (DVI). According to an implementation, the input and output interface 130 may include a port through which only audio signals are input and output and a port through which only image signals are input and output as separate ports, or implemented as one port through which both the audio signals and the image signals are input and output.

Specifically, the input and output interface 130 may receive input of an image from an external source. In addition, the input and output interface 130 may transmit wireless data generated by the processor 150 to the external device 200. In addition, the input and output interface 130 may receive specification information of the external device 200 from the external device 200.

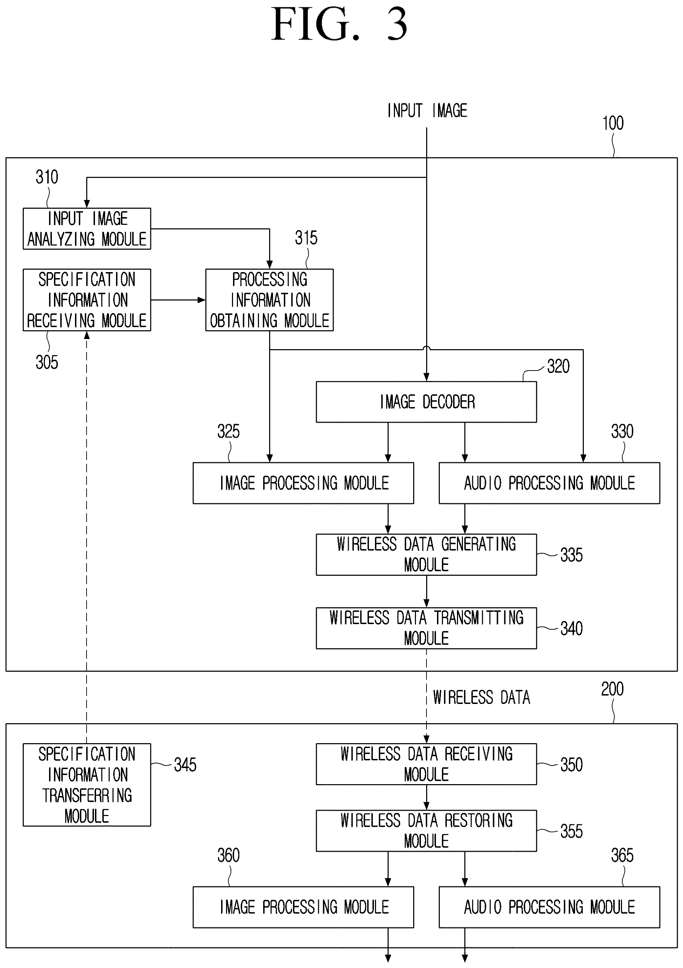

The memory 140 may store an operating system (OS) for controlling the overall operation of the elements of the electronic apparatus 100 and instructions or data associated with the elements of the electronic apparatus 100. Specifically, the memory 140 may include a plurality of modules (e.g., specification information receiving module 305, input image analyzing module 310, processing information obtaining module 315, image decoder 320, image processing module 325, audio processing module 330, wireless data generating module 335, wireless data transmitting module 340, and the like shown in FIG. 3) for generating wireless data using the input image and transmitting the generated wireless data to the external device 200. Specifically, when a function of generating wireless data using the input image and transmitting the generated wireless data to the external device 200 is executed, the electronic apparatus 100 may load data for the various modules stored in a non-volatile memory to perform various operations in a volatile memory. Here, loading may mean an operation for calling data stored in the non-volatile memory to the volatile memory for the processor 150 to access and storing.

In addition, the memory 140 may store a neural network model trained to perform the AI image/AI audio processing. However, the neural network model being stored in the memory 140 is merely one embodiment, and may be stored in an external server.

Meanwhile, the memory 140 may be implemented as a non-volatile memory (e.g., hard disk, solid state drive (SSD), flash memory), a volatile memory (may also include memory in the processor 150), and the like.

The processor 150 may control the electronic apparatus 100 according to at least one instruction stored in the memory 140.

Specifically, the processor 150 may include one or more processors. Specifically, the one or more processors may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors may control one or a random combination of other elements of the electronic apparatus, and perform an operation associated with communication or data processing. The one or more processors may execute one or more programs or instructions stored in the memory. For example, the one or more processors may perform, by executing one or more instructions stored in the memory, a method according to an embodiment of the disclosure.

When a method according to an embodiment of the disclosure includes a plurality of operations, the plurality of operations may be performed by one processor, or performed by a plurality of processors. In other words, when a first operation, a second operation, and a third operation are performed by a method according to an embodiment, the first operation, the second operation, and the third operation may all be performed by a first processor, or the first operation and the second operation may be performed by the first processor (e.g., a generic-purpose processor) and the third operation may be performed by a second processor (e.g., an artificial intelligence dedicated processor). As an example, according to an embodiment of the disclosure, an AI image/AI audio processing operation and the like may be performed by a processor capable of performing parallel computation such as GPU or NPU, and generating a multi-view image, HDR processing, and the like may be performed by the generic-purpose processing such as the CPU.

The one or more processors may be implemented as a single core processor that includes one core, or implemented as one or more multicore processors that include a plurality of cores (e.g., a homogeneous multicore or a heterogeneous multicore). If the one or more processors are implemented as multicore processors, each of the plurality of cores included in the multicore processors may include a memory inside the processor such as a cache memory and an on-chip memory, and a common cache shared by the plurality of cores may be included in the multicore processors. In addition, each of the plurality of cores (or a portion of the plurality of cores) included in the multicore processors may independently read and perform a program command for implementing a method according to an embodiment of the disclosure, or read and perform a program command for implementing a method according to an embodiment of the disclosure due to a whole (or a portion) of the plurality of cores being interconnected.

When a method according to an embodiment of the disclosure includes a plurality of operations, the plurality of operations may be performed by one core of a plurality of cores or performed by the plurality of cores included in the multicore processors. For example, when a first operation, a second operation, and a third operation are performed by a method according to an embodiment, the first operation, the second operation, and the third operation may all be performed by a first core included in the multicore processors, or the first operation and the second operation may be performed by the first core included in the multicore processors and the third operation may be performed by a second core included in the multicore processors.

According to one or more embodiments of the disclosure, the processor 150 may obtain specification information about a function of the external device 200 with which an image is processable. When the image is input, the processor 150 may obtain processing information of the input image by analyzing the input image. The processor 150 may process the input image based on the processing information of the input image and the specification information of the external device. The processor 150 may generate wireless data to transmit to the external device based on the processed image. The processor 150 may transmit the generated wireless data to the external device 200 through the communication interface 120.

In an embodiment, the processor 150 may identify whether the external device 200 is capable of processing the input image according to the processing information of the input image based on the specification information of the external device 200. based on the external device 200 being identified as not capable of processing the input image according to the processing information of the input image, the processor 150 may process the input image based on the processing information of the input image, and generate first wireless data to transmit to the external device 200 based on the processed image. However, based on the external device 200 being identified as capable of processing the input image according to the processing information of the input image, the processor 150 may generate second wireless data to transmit to the external device 200 based on the input image. At this time, the second wireless data may include the processing information of the input image.

Various embodiments of the disclosure will be described in greater detail below with reference to FIG. 3 to FIG. 6.

FIG. 3 is a block diagram illustrating configurations of an electronic apparatus and an external device for image processing and image transmission according to an embodiment of the disclosure. As shown in FIG. 3, the electronic apparatus 100 may include the specification information receiving module 305, the input image analyzing module 310, the processing information obtaining module 315, the image decoder 320, the image processing module 325, the audio processing module 330, the wireless data generating module 335, and the wireless data transmitting module 340. The external device 200 may include a specification information transferring module 345, a wireless data receiving module 350, a wireless data restoring module 355, an image processing module 360, and an audio processing module 365. At this time, each of the modules may be implemented with software, but this is merely one embodiment, and may also be implemented with a combination of software and hardware.

The specification information receiving module 305 may receive specification information of the external device 200 from the specification information transferring module 345 of the external device 200. At this time, the specification information may be received when the external device 200 is initially connected with the electronic apparatus 100, but this is merely one embodiment, and the specification information may be received when a user command for performing a function provided by the external device (200) is input with respect to an image acquired by the electronic device 100.

The specification information may include information regarding capability of an external device 200 capable of processing an image(or audio). For example, whether the external device 200 is capable of processing the multi-view image, whether HDR processing can be performed, whether the AI image/AI audio processing can be performed, whether the edge blending function may be performed, and the like may be included in the specification information. At this time, the multi-view image may be an image that provides a plurality of images in one screen by processing the plurality of images, the High Dynamic Range (HDR) processing may involve processing an image to improve contrast ratio by maximizing a difference between a bright portion and a dark portion in an image, the AI image processing may involve performing processing of an input image (e.g., recognizing an object or performing Super resolution (SR) processing) using a trained neural network model, the AI audio processing may involve performing processing of audio (e.g., separating a voice/background sound and processing at least one of the voice or the background sound, etc.) included in the input image using a trained neural network model, and the edge blending function may be a function for removing boundary lines generated when images projected from a plurality of projectors are overlapped. However, this is merely one embodiment, and the specification information may be included with information on whether other image processing (or audio processing) can be performed (e.g., information about room to room share function, mirroring function, VRR processing function, and the like).

The input image analyzing module 310 may obtain information about the input image by analyzing the input image. Specifically, the input image analyzing module 310 may analyze whether a plurality of images is included in the input image. Alternatively, the input image analyzing module 310 may analyze the image processing function which can be applied to the input image by analyzing metadata of the input image. For example, based on HDR information being included in the metadata of the input image, the input image analyzing module 310 may analyze as HDR processing being necessary for the input image.

The processing information obtaining module 315 may obtain processing information based on information about the input image received from the input image analyzing module 310. Specifically, the processing information obtaining module 315 may obtain processing information by determining a codec for processing the input image, an image processing method, an audio processing method, and the like based on information about the input image received from the input image analyzing module 310.

Specifically, the processing information obtaining module 315 may obtain image processing information to be applied to the input image. In an embodiment, based on information that there is one input image being obtained from the input image analyzing module 310, the processing information obtaining module 315 may obtain processing information of the one input image to which multi-view image processing is not applied. based on information that the input image is in plurality being obtained from the input image analyzing module 310, the processing information obtaining module 315 may obtain processing information of the plurality of input images to which multi-view image processing is applied. In an embodiment, based on HDR information being identified as not included in the input image from the input image analyzing module 310, the processing information obtaining module 315 may obtain processing information of the input image to which HDR processing is not applied. Based on HDR information being identified as included in the input image from the input image analyzing module 310, the processing information obtaining module 315 may obtain processing information of the input image to which HDR processing is applied.

In addition, the processing information obtaining module 315 may obtain processing information through a user input rather than information about the input image received from the input image analyzing module 310. In an embodiment, based on a user command for turning-on the AI image/AI audio processing being input from the user inputter 110, the processing information obtaining module 315 may obtain processing information of the input image to which the AI image/AI audio processing is applied. Based on a user command for turning-off the AI image/AI audio processing being input from the user inputter 110, the processing information obtaining module 315 may obtain processing information of the input image to which the AI image/AI audio processing is not applied. In an embodiment, based on a user command for performing the multi-projection function being input from the user inputter 110, the processing information obtaining module 315 may obtain processing information of the input image to which the edge blending function is performed.

The image decoder 320 may decode the input image. Specifically, the image decoder 320 may decompress the image data compressed with encoding or decrypt the encrypted image data. At this time, based on the input image being in plurality, the image decoder 320 may perform decoding of the plurality of images.

The image processing module 325 may process the input image based on processing information obtained from the processing information obtaining module 315. Specifically, based on processing information to which at least one of multi-view image processing, HDR processing, and AI image processing is applied is obtained, the image processing module 325 may process the input image according to the image processing method included in the processing information. In an embodiment, based on processing information of applying the multi-view image processing being input, the image processing module 325 may perform a scaling operation for the plurality of input images, and perform image processing for the plurality of images performed with the scaling operation to be displayed on one screen. In an embodiment, based on processing information of applying the HDR processing being input, the image processing module 325 may perform HDR processing of the input image based on pixel information and HDR information of the input image. In an embodiment, based on processing information of applying the AI image processing being input, the image processing module 325 may perform an image quality improvement processing by inputting the input image in a neural network model. In an embodiment, based on processing information of performing the edge blending function being input, the image processing module 325 may perform image processing to remove boundary lines (or boundary surface) which are generated when performing a multi-projection using the input image.

The audio processing module 330 may process audio included in the input image based on processing information obtained from the processing information obtaining module 315. Specifically, based on processing information of applying at least one of the multi-view image processing and the AI audio processing being obtained, the audio processing module 330 may process audio included in the input image according to the audio processing method included in the processing information. In an embodiment, based on processing information of applying the multi-view image processing being input, the audio processing module 330 may perform a processing operation of mixing a plurality of audios corresponding to the plurality of input images. In an embodiment, based on processing information of applying the AI image processing being input, the audio processing module 330 may perform sound improvement processing by inputting the audio included in the input image in a neural network model.

The wireless data generating module 335 may generate wireless data using the processed image and audio. At this time, the wireless data generating module 335 may generate wireless data by performing a low latency compression (e.g., DirectX Texture (DXT) compression). Meanwhile, based on the external device 200 being identified as performing image/audio processing, processing information of the input image may be included in the wireless data. At this time, the processing information may be stored in the wireless data in metadata form of the input image.

The wireless data transmitting module 340 may transmit the generated wireless data. At this time, the wireless data transmitting module 340 may transmit wireless data using a short-range communication interface (e.g., Wi-Fi Direct interface, Bluetooth interface, etc.). Meanwhile, in the above-described embodiment, although it has been described as generating wireless data and transmitting to the external device 200 through a wireless communication interface, the above is merely one embodiment, and data about the input image may be generated, and the generated data may be transmitted through the input and output interface 130.

The specification information transferring module 345 may transmit specification information to the electronic apparatus 100. At this time, specification information may be transmitted when the external device 200 is initially connected with the electronic apparatus 100, but this is merely one embodiment, and specification information may be transmitted when a user command for performing a function of displaying an image acquired by the electronic device 100 on the external device 200 is input. Alternatively, the specification information transferring module 345 may transmit specification information to the electronic apparatus 100 when a function of the external device 200 is updated.

The wireless data receiving module 350 may receive wireless data received from the electronic apparatus 100. At this time, the wireless data receiving module 350 may receive wireless data using the short-range communication interface.

The wireless data restoring module 355 may restore the input image (or audio, metadata) using compressed wireless data.

The image processing module 360 may process as an image to be output through a display using the restored image. At this time, based on metadata including the processing information of the input image being included in the wireless data, the image processing module 360 may process the image based on the processing information included in the metadata. Specifically, based on processing information of applying at least one of the multi-view image processing, the HDR processing, the AI image processing, and the edge blending function being included in the metadata, the image processing module 360 may process the input image according to the image processing method included in the processing information. Then, the image processed by the image processing module 360 may be output through the display.

The audio processing module 365 may process as an audio to be output through a speaker (or audio output configuration) using the restored audio. At this time, based on metadata including processing information of the input audio being included in the wireless data, the audio processing module 365 may process the audio based on the processing information included in the metadata. Specifically, based on processing information of applying at least one of the multi-view image processing and the AI image processing being included in the metadata, the audio processing module 365 may process the input image according to the audio processing method included in the processing information. Then, the audio processed by the audio processing module 365 may be output through the speaker (or audio output configuration).

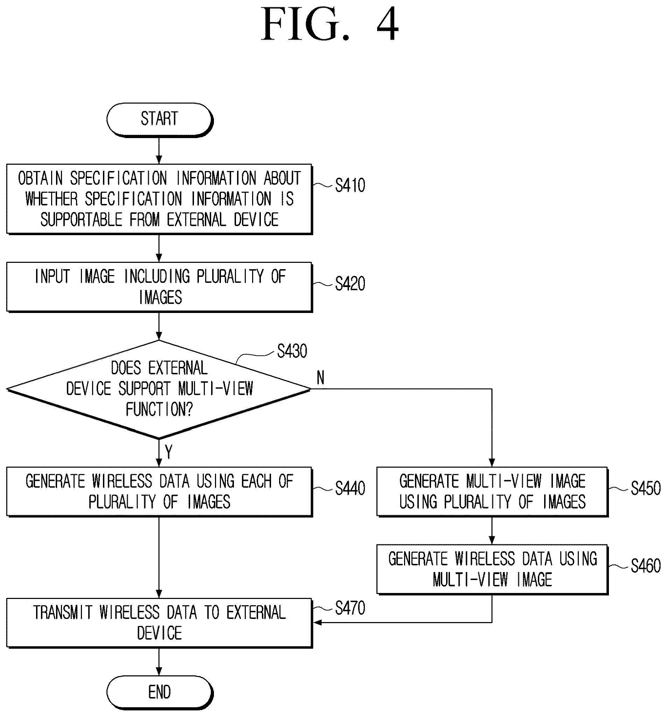

FIG. 4 is a flowchart illustrating an image transmitting example according to whether an external device supports a multi-view function according to an embodiment of the disclosure.

First, the electronic apparatus 100 may obtain specification information about whether the multi-view function is supportable from the external device 200 (S410). In other words, the electronic apparatus 100 may obtain specification information about whether the external device 200 supports the multi-view function of processing a plurality of images to one screen.

The electronic apparatus 100 may receive input of an image that includes a plurality of images (S420). At this time, the electronic apparatus 100 may receive input of information (or control command) for generating the plurality of images input together with the input image into the multi-view image. Accordingly, based on the plurality of input images being included, the electronic apparatus 100 may obtain processing information of applying the multi-view image processing to the input image.

The electronic apparatus 100 may identify whether the external device 200 supports the multi-view function (S430). In other words, the electronic apparatus 100 may identify whether the multi-view function is supported based on the specification information of the external device 200.

Based on the external device 200 being identified as supporting the multi-view function (S430-Y), the electronic apparatus 100 may generate wireless data using each of the plurality of images (S440). Specifically, the electronic apparatus 100 may generate wireless data using each of the plurality of images to generate a multi-view image. At this time, the electronic apparatus 100 may generate wireless data for processing information of processing the plurality of images to a multi-view image to be included in the wireless data.

Based on the external device 200 being identified as not supporting the multi-view function (S430-N), the electronic apparatus 100 may generate the multi-view image using the plurality of images (S450). In other words, the electronic apparatus 100 may generate the multi-view image to be displayed in one screen by performing a scaling operation of the plurality of images. In addition, the electronic apparatus 100 may mix a plurality of audios corresponding to each of the plurality of images and generate audio for the multi-view image. The electronic apparatus 100 may generate wireless data using the multi-view image (including audio for the multi-view image) (S460).

Then, the electronic apparatus 100 may transmit the wireless data generated in step S440 or step S460 to the external device 200 (S470).

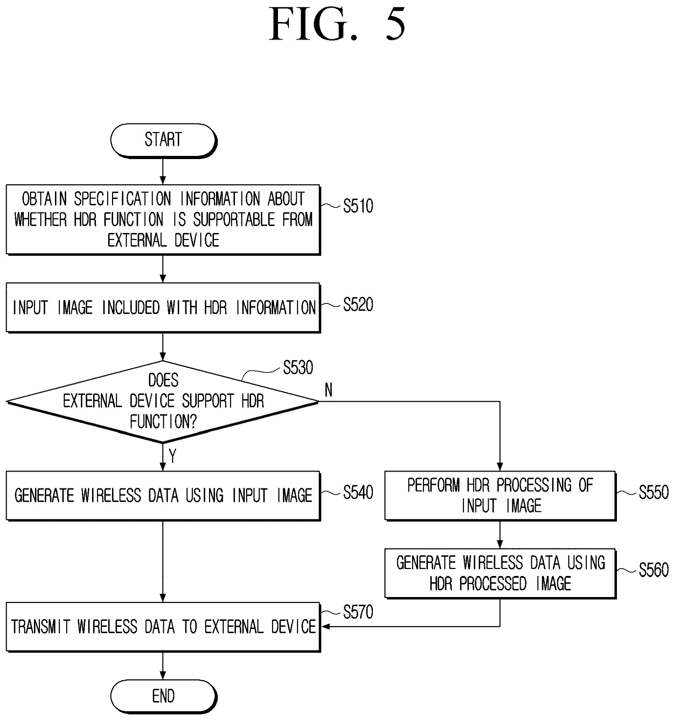

FIG. 5 is a flowchart illustrating an image transmitting example according to whether an external device supports a HDR function according to an embodiment of the disclosure.

First, the electronic apparatus 100 may obtain specification information about whether the HDR function is supportable from the external device 200 (S510). In other words, the electronic apparatus 100 may obtain the specification information about whether the external device 200 supports the HDR processing of the input image.

The electronic apparatus 100 may receive input of an image included with HDR information (S520). At this time, the HDR information may be included in metadata form in the input image.

The electronic apparatus 100 may identify whether the external device 200 supports the HDR function (S530). In other words, the electronic apparatus 100 may identify whether the HDR function is supported based on specification information of the external device 200.

Based on the external device 200 being identified as supporting the HDR function (S530-Y), the electronic apparatus 100 may generate wireless data using the input image (S540). At this time, the electronic apparatus 100 may generate wireless data for processing information of performing HDR processing of the input image to be included in the wireless data.

Based on the external device 200 being identified as not supporting the HDR function (S530-N), the electronic apparatus 100 may perform the HDR processing of the input image (S550). In other words, the electronic apparatus 100 may obtain an image with improved contrast ratio by performing the HDR processing of the input image. The electronic apparatus 100 may generate wireless data using the HDR processed image (S560).

Then, the electronic apparatus 100 may transmit the wireless data generated in step S540 or step S560 to the external device 200 (S570).

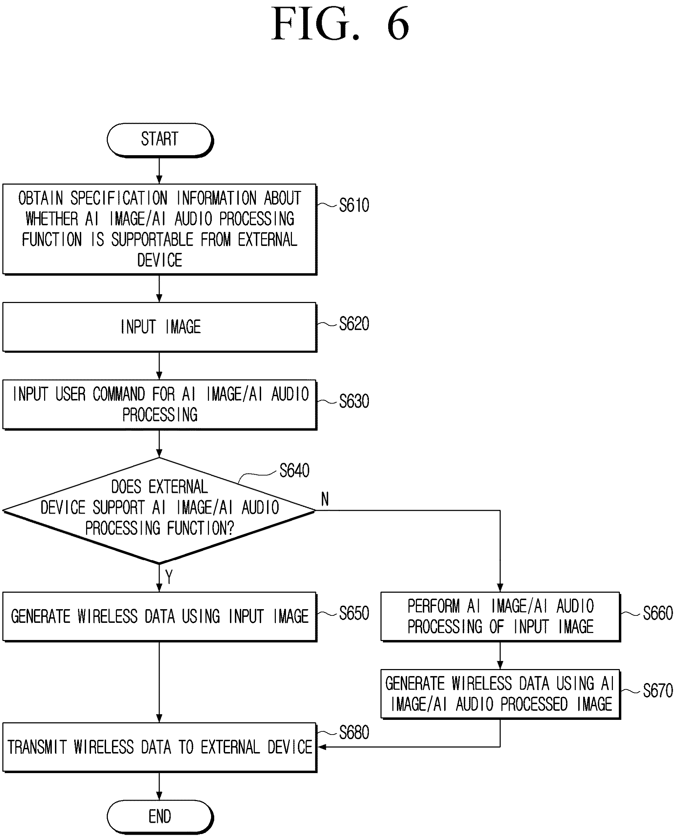

FIG. 6 is a flowchart illustrating an image transmitting example according to whether an external device supports an AI image/ AI audio processing function according to an embodiment of the disclosure.

First, the electronic apparatus 100 may obtain specification information about whether the AI image/AI audio processing function is supportable from the external device 200 (S610). In other words, the electronic apparatus 100 may obtain specification information about whether the external device 200 supports the AI image/AI audio processing function of the input image. At this time, the AI image/AI audio processing function may be a function for inputting the input image/audio in a trained neural network model and obtaining an image quality of sound improved image/audio.

The electronic apparatus 100 may receive input of an image (S620).

The electronic apparatus 100 may receive input of a user command for AI image/AI audio processing (S630). In other words, the electronic apparatus 100 may receive input of a user command for turning-on the AI image/AI audio processing function. At this time, step S630 may be performed prior to step S620.

The electronic apparatus 100 may identify whether the external device 200 supports the AI image/AI audio processing function (S640). In other words, the electronic apparatus 100 may identify whether the AI image/AI audio processing function is supported based on specification information of the external device 200.

Based on the external device 200 being identified as supporting the AI image/AI audio processing function (S640-Y), the electronic apparatus 100 may generate wireless data using the input image (S650). At this time, the electronic apparatus 100 may generate wireless data for processing information of performing the AI image/AI audio processing function of the input image to be included in the wireless data.

Based on the external device 200 being identified as not supporting the AI image/AI audio processing function (S640-N), the electronic apparatus 100 may perform the AI image/AI audio processing of the input image (S660). In other words, the electronic apparatus 100 may obtain the image quality/sound improved image by performing the AI image/AI audio processing of the input image. The electronic apparatus 100 may generate wireless data using the AI image/AI audio processed image/audio (S670).

Then, the electronic apparatus 100 may transmit the wireless data generated in step S650 or step S670 to the external device 200 (S680).

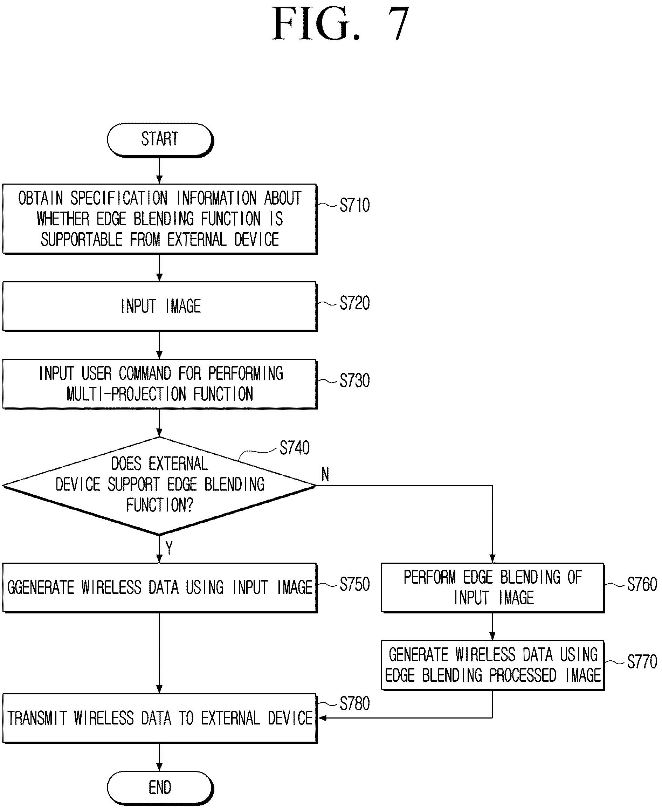

FIG. 7 is a flowchart illustrating an image transmitting example according to whether an external device supports an edge blending function according to an embodiment of the disclosure. Meanwhile, in the embodiment of FIG. 7, as shown in FIG. 1B, an example of the electronic apparatus 100 being implemented as a TV and the external device 200 being implemented as a projector is shown.

First, the electronic apparatus 100 may obtain specification information about whether the edge blending is supportable from the external device 200 (S710). In other words, the electronic apparatus 100 may obtain specification information about whether the external device 200 supports the edge blending function of the input image. At this time, the edge blending function may be a function for removing boundary lines which are generated, when images are projected through a plurality of projectors, at portions where the images projected by the plurality of projectors overlap.

The electronic apparatus 100 may receive input of an image (S720).

The electronic apparatus 100 may receive input of a user command for performing the multi-projection function (S730). In other words, the electronic apparatus 100 may receive input of a user command for turning-on a function for implementing one screen through a plurality of projectors. At this time, step S730 may be performed prior to step S720.

The electronic apparatus 100 may identify whether the external device 200 supports the edge blending function (S740). In other words, the electronic apparatus 100 may identify whether the edge blending function is supported based on specification information of the external device 200.

Based on the external device 200 being identified as supporting the edge blending function (S740-Y), the electronic apparatus 100 may generate wireless data using the input image (S750). At this time, the electronic apparatus 100 may generate wireless data for processing information of performing the edge blending function of the input image to be included in the wireless data.

Based on the external device 200 being identified as not supporting the edge blending function (S740-N), the electronic apparatus 100 may perform the edge blending function of the input image (S760). In other words, the electronic apparatus 100 may obtain a noise-removed image generated at a boundary surface between the plurality of images by performing edge blending of the input image. The electronic apparatus 100 may generate wireless data using the edge blending processed image (S670).

Then, the electronic apparatus 100 may transmit the wireless data generated in step S750 or step S770 to the external device 200 (S780).

Meanwhile, in FIG. 4 to FIG. 7, although the specification information of the external device 200 obtained by the electronic apparatus 100 has been described as information about whether the multi-view function is supported, whether the HDR function is supported, whether the AI image/AI audio processing function is supported, and whether the edge blending function is supported, but this is merely one embodiment, and various specification information such as whether the room to room share (or, screen link) function is supported, whether the mirroring function is supported, whether the variable refresh rate (VRR) function is supported, and the like may be obtained. At this time, based on the external device 100 not supporting the room to room share function, the mirroring function, or the VRR function, the electronic apparatus 100 may support the external device 200 to perform the room to room share function, the mirroring function, or the VRR function generating wireless data by performing image processing of the input image according to the obtained processing information. For example, the electronic apparatus 100 may generate wireless data by processing the input image to correspond to the room to room share function or the mirroring function, and generate wireless data by processing the input image for the refresh rate to be increased.

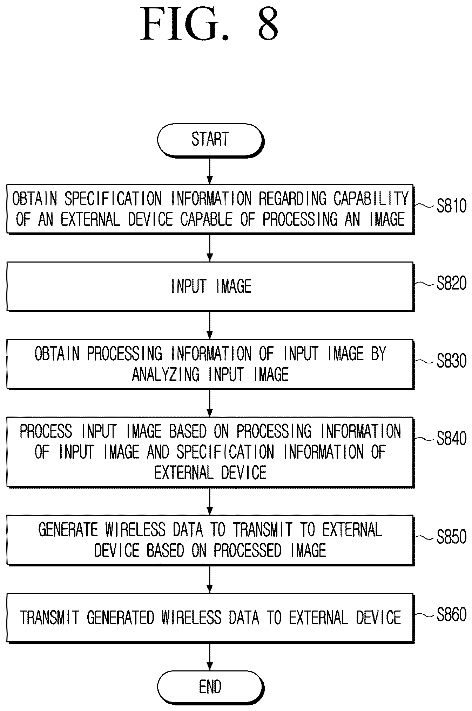

FIG. 8 is a flowchart illustrating a control method of an electronic apparatus according to an embodiment.

The electronic apparatus 100 may obtain specification information regarding capability of an external device capable of processing an image (S810).

The electronic apparatus 100 may receive input of the image (S820). At this time, metadata associated with the processing method of the input image may be included in the input image.

The electronic apparatus 100 may obtain processing information of the input image by analyzing the input image (S830). At this time, the electronic apparatus 100 may obtain the processing information of the input image by analyzing a number of images included in the input image or the metadata included in the input image. In addition, the electronic apparatus 100 may obtain the processing information of the input image according to the user input.

The electronic apparatus 100 may process the input image based on the processing information of the input image and the specification information of the external device (S840). Then, the electronic apparatus 100 may generate wireless data to transmit to the external device 200 based on the processed image (S850). Specifically, the electronic apparatus 100 may identify whether the external device 200 is capable of processing the input image according to the processing information of the input image based on the specification information of the external device 200. Based on the external device being identified as not capable of processing the input image according to the processing information of the input image, the electronic apparatus 100 may process the input image based on the processing information of the input image, and generate first wireless data to transmit to the external device based on the processed image. However, based on the external device 200 being identified as capable of processing the input image according to the processing information of the input image, the electronic apparatus 100 may generate second wireless data to transmit to the external device 200 based on the input image. At this time, the second wireless data may include the processing information of the input image.

The electronic apparatus 100 may transmit the generated wireless data to the external device 200 (S860). At this time, the electronic apparatus 100 may transmit the wireless data to the external device 200 through a short-range wireless communication interface.

Meanwhile, in the above-described embodiment, the specification information of the external device 200 has been described as including only whether to apply the image processing function/audio processing function, but this is merely one embodiment, and information about a function of the image processing function/audio processing function may be included. For example, based on the multi-view image processing function being also applied to the external device 200, but based on the images for creating the multi-view image being four at maximum, the specification information may include information that the multi-view image processing function is supportable together with information that a maximum of four images is used to generate the multi-view image. At this time, the multi-view image may be generated in the electronic apparatus 100 or the multi-view image may be generated in the external device 200 according to a number of input images in the electronic apparatus 100. For example, based on there being two input images, the electronic apparatus 100 may generate wireless data using each of the two images, but based on there being six input images, the electronic apparatus 100 may generate a multi-view image using the six images and then, generate wireless data using the generated multi-view image. In another example, the AI image processing function may also be applied to the external device 200, but based ona neural network model of a first version for the AI image processing being stored, the specification information may include information that the AI image processing function is supportable together which information about the neural network model of the first version. At this time, based on a user command to perform the AI image processing using a neural network model of a second version being input, the electronic apparatus 100 may obtain the processed image by inputting the input image in the neural network model of the second version, and generate wireless data using the processed image.

Meanwhile, a method according to the various embodiments of the disclosure may be provided included a computer program product. The computer program product may be exchanged between a seller and a purchaser as a commodity. The computer program product may be distributed in a form of a machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be stored at least temporarily in the machine-readable storage medium such as a server of a manufacturer, a server of an application store, or a memory of a relay server, or temporarily generated.

A method according to various embodiments of the disclosure may be implemented with software including instructions stored in the machine-readable storage media (e.g., computer). The machine may call the instructions stored in the storage medium, and as a device operable according to the called instruction, may include an electronic apparatus (e.g., TV) according to the above-mentioned embodiments.

Meanwhile, the machine-readable storage medium may be provided in a form of a non-transitory storage medium. Herein, 'non-transitory storage medium' merely means that the storage medium is a tangible device, and does not include a signal (e.g., electromagnetic waves), and the term does not differentiate data being semi-permanently stored or being temporarily stored in the storage medium. For example, the 'non-transitory storage medium' may include a buffer in which data is temporarily stored.

Based on the instructions being executed by the processor, the processor may directly or using other elements under the control of the processor perform a function relevant to the instruction. The instructions may include a code generated by a compiler or executed by an interpreter.

While the disclosure has been illustrated and described with reference to example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. An electronic apparatus, comprising:
a communication interface;
memory storing at least one instruction; and
a processor configured to:
obtain specification information regarding capability of an external device capable of processing an image,
obtain, based on an image being input, processing information of the input image by analyzing the input image,
process the input image based on processing information of the input image and specification information of the external device,
generate wireless data to transmit to the external device based on the processed image, and
transmit the generated wireless data to an external device through the communication interface.

2. The electronic apparatus of claim 1, wherein
the processor is configured to:
identify whether the external device is capable of processing the input image according to processing information of the input image based on specification information of the external device, and
process, based on the external device being identified as not capable of processing the input image according to processing information of the input image, the input image based on processing information of the input image, and generate first wireless data to transmit to the external device based on the processed image.

3. The electronic apparatus of claim 2, wherein
the processor is configured to
generate, based on the external device being identified as capable of processing the input image according to processing information of the input image, second wireless data to transmit to the external device based on the input image, and
the second wireless data comprises processing information of the input image.

4. The electronic apparatus of claim 1, wherein
specification information of the external device comprises information about whether the external device supports a multi-view function, and
the processor is configured to obtain, based on an image being input, processing information comprising a plurality of images for the input image to provide a multi-view image by analyzing the input image.

5. The electronic apparatus of claim 4, wherein
the processor is configured to:
generate, based on the external device being identified as supporting a multi-view function based on specification information of the external device, third wireless data about the plurality of images, and control the communication interface to transmit the third wireless data to the external device, and
process, based on the external device being identified as not supporting a multi-view function based on specification information of the external device, the input image to generate a multi-view image based on the plurality of images, generate fourth wireless data about the generated multi-view image, and control the communication interface to transmit the fourth wireless data to the external device.

6. The electronic apparatus of claim 1, wherein
specification information of the external device comprises information about whether the external device supports a High Dynamic Range (HDR) function, and
the processor is configured to
analyze, based on an image being input, the input image and obtain processing information necessary for HDR processing of the input image.

7. The electronic apparatus of claim 6, wherein
the processor is configured to:
generate, based on the external device being identified as supporting a HDR function based on specification information of the external device, fifth wireless data based on the input image, control the communication interface to transmit the fifth wireless data to the external device, and at this time, the fifth wireless data comprises processing information for the HDR processing, and
perform, based on the external device being identified as not supporting a HDR function based on specification information of the external device, HDR processing of the input image, generate sixth wireless data about an image performed with the HDR processing, and control the communication interface to transmit the sixth wireless data to the external device.

8. The electronic apparatus of claim 1, wherein
specification information of the external device comprises information about whether the external device supports an AI image/AI audio processing function, and
the processor is configured to obtain, based on an image being input, processing information necessary for AI image or AI audio processing of the input image.

9. The electronic apparatus of claim 8, wherein
the processor is configured to:
generate, based on the external device being identified as supporting an AI image processing function based on specification information of the external device, seventh wireless data based on the input image, control the communication interface to transmit the seventh wireless data to the external device, and at this time, the seventh wireless data comprises processing information for the AI image processing, and
perform, based on the external device being identified as not supporting an AI image processing function based on specification information of the external device, AI image processing of the input image, generate eighth wireless data about an image performed with the AI image processing, and control the communication interface to transmit the eighth wireless data to the external device.

10. The electronic apparatus of claim 8, wherein
the processor is configured to:
generate, based on the external device being identified as supporting an AI audio processing function based on specification information of the external device, ninth wireless data based on the input image, control the communication interface to transmit the ninth wireless data to the external device, and at this time, the nine wireless data comprises processing information for the AI audio processing, and
perform, based on the external device being identified as not supporting an AI audio processing function based on specification information of the external device, AI audio processing of an audio of the input image, generate tenth wireless data about an image that comprises an audio performed with the AI audio processing, and control the communication interface to transmit the tenth wireless data to the external device.

11. The electronic apparatus of claim 1, wherein
specification information of the external device comprises information about whether the external device supports an edge blending function, and
the processor is configured to:
obtain, based on an image being input, processing information necessary for edge blending processing of the input image,
generate, based on the external device being identified as supporting an edge blending function based on specification information of the external device, eleventh wireless data based on the input image, control the communication interface to transmit the eleventh wireless data to the external device, and at this time, the eleventh wireless data comprises processing information for the edge blending processing, and
perform, based on the external device being identified as not supporting an edge blending function based on specification information of the external device, edge blending processing of the input image, generate twelfth wireless data about an image performed with the edge blending processing, and control the communication interface to transmit the twelfth wireless data to the external device.

12. A control method of an electronic apparatus, the method comprising:
obtaining specification information regarding capability of an external device capable of processing an image;
obtaining, based on an image being input, processing information of the input image by analyzing the input image;
processing the input image based on processing information of the input image and specification information of the external device;
generating wireless data to transmit to the external device based on the processed image; and
transmitting the generated wireless data to the external device.

13. The method of claim 12, wherein
the processing comprises:
identifying whether the external device is capable of processing the input image according to processing information of the input image based on specification information of the external device; and
processing, based on the external device being identified as not capable of processing the input image according to processing information of the input image, the input image based on processing information of the input image,
the generating comprises
generating first wireless data to transmit to the external device based on the processed image.

14. The method of claim 13, wherein
the generating comprises
generating, based on the external device being identified as capable of processing the input image according to processing information of the input image, second wireless data to transmit to the external device based on the input image, and
the second wireless data comprises processing information of the input image.

15. The method of claim 12, wherein
specification information of the external device comprises information about whether the external device supports a multi-view function, and
obtaining processing information of the input image comprises
obtaining, based on an image being input, processing information comprising a plurality of images for the input image to provide a multi-view image by analyzing the input image.
